# EUROPEAN PATENT APPLICATION

(11) **EP 4 814 893 A1**
(43) Date of publication of application: **30.09.2026**
(21) Application number: 25166048.6
(22) Date of filing: 25.03.2025
(51) Int. Cl.: G06V 10/82, G06V 20/40, G06V 20/56

(54) **VEHICLE, SYSTEM, METHOD FOR A VEHICLE, METHOD FOR GENERATING A TRAINED MODEL, ELECTRONIC DEVICE AND BACKEND SERVER**

(71) Applicant: VOLKSWAGEN AG, 38440 Wolfsburg (DE)
(72) Inventor: PFADLER, Andreas, 13357 Berlin (DE); FRICKE, Jenny, 38118 Braunschweig (DE)
(74) Representative: Gulde & Partner

(57) **Abstract**

The invention refers to a vehicle (10) and a system (100) comprising the vehicle (10). Further, the invention pertains to a method for a vehicle (10) and a method for generating a trained model for triggering a data collection system (14) of a vehicle (10). Moreover, the invention relates to an electronic device (24) and/or a backend server (26) configured to perform the latter method and to computer programs.

It is provided that a data collection system (14) of a vehicle (10) is triggered based on an output of a stored trained model for triggering the data collection system (14). An image and/or an intuitive textual description indicative of a predefined scenario and vehicle environment data detected by an environment detection system (12) of the vehicle (10) are used as an input to the trained model for triggering the data collection system (14). The trained model identifies the predefined scenario corresponding to the input image and/or intuitive textual description and outputs information indicating whether the input vehicle environment data matches the identified predefined scenario and the detected vehicle environment data corresponding to the predefined scenario are stored to be available for analysis, validation and training data purposes. Therefore, more precise and meaningful data acquisition with significantly reduced setup effort is achieved.

## Description

The invention refers to a vehicle and a system comprising the vehicle. Further, the invention pertains to a method for a vehicle and a method for generating a trained model for triggering a data collection system of a vehicle. Moreover, the invention relates to an electronic device and/or a backend server configured to perform the latter method and to computer programs.

Mobility-as-a-service (MaaS) and transport-as-a-service (TaaS) products are modern products of a mobility provider owning or having access to a fleet of automated driving (AD) vehicles regularly collecting data. The vehicles of such a fleet collect data on different purposes, e.g., in order to generate reports for authorities (e.g., EU 2022/1426), to improve the overall system, or to be used for data monetization purposes. Collected data is data from the base vehicle, e.g. vehicle related data, such as model number, location information, velocity, driving direction, as well as from ambient detection systems, such as LiDAR, RADAR and camera data.

AD vehicles can be equipped with event-based data collection systems designed to gather information under specified conditions, such as during particular events, over defined durations, or under certain sampling rates. The conditions include a real-time availability, i.e. upload within seconds or minutes, or a delayed availability, i.e. upload within hours or days, of the collected data. Those events and the data collection is commonly specified within a so called data collection campaign. The data collection of such a data collection campaign includes the collection of raw data for a limited duration based on a certain event on which the collection shall be triggered.

Common parameters of data collection campaigns are, for example, duration, i.e. start and end time of the campaign, relevant vehicles, i.e. one or more vehicles from a fleet, data transfer mode, i.e. real-time (online) or delayed (offline), trigger event, i.e. conditions or logic that initiate the data collection, collection data, i.e. data gathered when the trigger conditions are met, pre-event time, which specifies the duration of historical data collected prior to an event, such as 30 seconds before the trigger, and post-event time, which specifies the duration of collected data after the event.

### State of the art

Document US 2021 / 0 206 387 A1 relates to autonomous driving systems provided with one or more sensors configured to capture perception data, a model configured to be continually trained in the transportation vehicle and a scalable subset memory configured to store a subset of a dataset previously used to train a model. A processor is provided for continually training the model in the transportation vehicle using captured perception data previously unseen and the subset and for generating a new subset of data to be stored so that the model avoids catastrophic forgetting.

Document EP 4 033 460 A1 discloses a system for assessing progress of a data-recording campaign performed to collect sensor data recorded by a sensor data recorder mounted on a vehicle. The system comprising a metadata-generating apparatus arranged to process data acquired by a sensor module to generate metadata for the sensor data. The metadata comprise classifications of an attribute of a driving environment the vehicle was in during the acquisition of the sensor data into respective classes of a predefined set of classes of the attribute. The metadata-generating apparatus transmits the metadata to a remote metadata-processing apparatus, which is arranged to determine whether the metadata comprises at least a predetermined number of classifications in a predefined class of the set of predefined classes. Based on the determination, an indicator for use in the data-recording campaign is generated.

US 2022 / 0 204 010 A1 pertains to a method and an apparatus for automated driving, a device and a computer-readable storage medium. The method for automated driving includes: obtaining data associated with a parameter and an external environment of a vehicle, the data being collected according to a collection policy for a target scenario for the vehicle; generating an automated driving model for the target scenario based on the obtained data; and updating the collection policy by testing the automated driving model.

### Description of the invention

In the field of AD and advanced driver assistance systems, data logging campaigns are crucial for collecting relevant training and validation data. Traditionally, setting up such campaigns requires expert knowledge of signal combinations to define specific conditions under which data should be collected, e.g. selecting and combining various signals to define trigger conditions. This approach is complex and time-consuming and requires deep expertise in signal selection and combination. Thus, the known approach is not intuitive, difficult to interpret and validate for non-experts. Therefore, there is a general demand to facilitate setting up data logging campaigns and to improve the relevance of logged data of the data logging campaign.

This problem is solved by the vehicle, the system, and the methods, the electronic device, the backup server and the computer programs according to the independent claims. Further advantages and embodiments will become apparent from the dependent claims as well as the following description.

According to an aspect of the invention, a vehicle is provided. The vehicle may be an at least partially autonomously controlled vehicle or a fully autonomously controlled vehicle. For example the vehicle is an AD vehicle including at least one (advanced) driver assistance system. The vehicle may be one of a plurality of vehicles of a fleet of vehicles. The vehicle comprises an environment detection system, a data collection system, an interface, a memory and a processor.

The environment detection system is configured to detect vehicle environment data. In other words, the environment detection system is an ambient detection system configured to detect or monitor the vehicle's surroundings at least partially for terrain and/or objects and to provide sensor data related to the vehicle's surroundings. The vehicle's surroundings may be divided into rear, front, left and right side zones with respect to the vehicle. The environment detection system may be configured to be actuatable on demand or to continuously scan the vehicle's surroundings.

The data collection system is configured to store the detected vehicle environment data. In other words, the data collection system is configured to receive and store the vehicle environment data detected by the environment detection system. The data collection system may be further configured to store vehicle-related data, e.g. fixed information about the vehicle, such as model number, production series, hardware and/or software information, and/or dynamic information, such as location information, velocity, driving direction and so on. Vehicle-related data allow to refine classification and perform a deeper processing of the collected data.

The interface is configured to receive an image and/or an intuitive textual description indicative of a predefined scenario. The image may be a graphic representation of a situation corresponding to a predefined scenario, e.g. an obstacle in the environment, such as a cyclist crossing an intersection, a children playing with a ball, a deer passing the street, traffic jam, a train passing a crossing and so on, and/or an emergency situation, such as an traffic accident, an ambulance passing by, a component failure of a vehicle and so on. The intuitive textual description may be a textual representation of a situation corresponding to such a predefined scenario. In contrast to program codes, the word intuitive is meant for textual descriptions which can be understood by any non-expert user. In other words, a non-expert user may provide a text of a situation and/or a condition corresponding to a predefined scenario. That is, instead of defining complex signal-based rules, sample images of relevant interactions and textual descriptions may be provided. Advantageously, setting up a campaign is less complex, more intuitive and user-friendly. The image may be accompanied by an intuitive textual description, e.g. an image representing a children playing with a ball and the text: "closer than 10 meter to the vehicle".

The memory, e.g. a non-volatile memory, stores a trained model for triggering the data collection system. The trained model for triggering the data collection system is configured to identify a predefined scenario corresponding to an input image and/or intuitive textual description, generate a scenario identifier corresponding to the identified predefined scenario, generate a matching index indicating whether or not an input vehicle environment data matches the identified predefined scenario and output the generated scenario identifier and matching index. In other words, the trained model for triggering the data collection system represents an artificial intelligence model which may be generated by machine learning. Such learning may be performed, e.g., by the vehicle or via a separate electronic device and/or backend server. Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. By integrating artificial-intelligence-driven scenario recognition into data logging campaign setups, the process is streamlined, made more user-friendly, efficient, and effective in capturing relevant real-world driving scenarios.

The processor is configured to input an image and/or intuitive textual description received by the interface and vehicle environment data detected by the environment detection system to the trained model for triggering the data collection system; in response to the input to the trained model for triggering the data collection system, obtain an output from the trained model for triggering the data collection system including a scenario identifier corresponding to an identified predefined scenario corresponding to the input image and/or intuitive textual description and a matching index indicating whether or not the input detected vehicle environment data matches the identified predefined scenario; and in response to the obtained output of the trained model, control the data collection system to store the detected vehicle environment data together with the obtained scenario identifier. In other words, the trained model for triggering the data collection system processes incoming (detected) vehicle environment data, e.g. camera data, identifies instances, i.e. scenarios, that match the provided examples, i.e. the predefined scenarios, and the data collection system is triggered accordingly. This enables more precise and meaningful data acquisition with significantly reduced setup effort. That is, the processor is configured to perform real time triggering of the data collection of the vehicle and automatically triggers the detection of the vehicle environment data upon detection of the predefined scenario. The processor may be configured to control the data collection system to store the detected vehicle environment data together with the obtained scenario identifier based on the obtained matching index. The matching index may be a binary value, e.g. "Yes" or "No". the binary value may be evaluated based on a matching parameter exceeding or falling below a predetermined threshold. The use of a binary value simplifies the triggering condition for data logging. The processor may further be configured to control the data collection system to store vehicle-related data in response to the obtained output of the trained model.

According to an embodiment, the data collection system may be configured to temporally store the detected vehicle environment data as a default and the processor may be configured to, in response to the obtained output of the trained model, control the data collection system to store the detected vehicle environment data together with the obtained scenario identifier in a long-term storage manner. Advantageously, the environment detection system may be continuously used to detect or monitor the vehicle environment, while handling of the generated data is simplified due to the temporal restricted storage thereof. This requires less storage space. The data collection system may comprise a ring memory configured to temporally store vehicle-related data and the detected vehicle environment data for a predetermined amount of time, e.g. for up to 30 seconds, 60 seconds, 120 seconds or any desired amount of time. A ring memory refers to a data structure used for temporary, cyclical data storage. It stores data in a fixed-size area and overwrites old data when the buffer is full. This storage is typically volatile, meaning the stored data is lost when the power is turned off. A ring memory may be implemented by using RAM or other volatile memory technologies. The term long-term storage manner may refer to a storage of the data in a permanent storage, such as a non-volatile memory. In particular, a permanent storage may refer to long-term data storage independent of power (non-volatile), i.e. a storage media that retain data without power. Examples include hard drives (HDDs), flash memory (SSDs), or ROM, where the data persists even after the device is powered off. As the control of the data collection system to store the detected vehicle environment data and the obtained scenario identifier is performed based on the output of the trained model for triggering the data collection system, only relevant data is transferred to the non-volatile memory, while less relevant data is deleted or overwritten after the expiration of a predetermined amount of time. Accordingly, the available storage space is more efficiently used. In other words, less storage space is required to store the desired data.

According to another embodiment, the processor may be configured to, in response to the obtained output of the trained model, control the environment detection system to temporally increase the amount of detected vehicle environment data per time. For example, this may be obtained through activation of additional sensors of the environment detection system and/or by increasing the detection repetition rates of the (activated) sensor(s) of the environment detection system. Advantageously, the amount of relevant data and its relevant content may be increased to provide a more precise and meaningful data acquisition.

According to another embodiment, the environment detection system may comprise a RADAR sensor, a LiDAR sensor and/or a camera sensor, e.g. a high definition (HD) camera sensor, configured to detect vehicle environment data. Modern vehicles are most of the time already equipped with at least one of these sensors such that the functionality thereof may be increased without significantly increasing the costs of the vehicle. The combined use of different sensors to detect vehicle environment data allows to better define and identify the predefined scenarios, e.g. by using camera data and an object recognition for generally determining and classifying objects and radar data for determining velocities and distances of detected objects to the vehicle. Therefore, the amount of relevant data is increased and a more precise and meaningful data acquisition may be achieved. The trained model for triggering the data collection system may be configured to use the input of any of the mentioned sensors to provide the output as described above.

According to another embodiment, the received image and/or the intuitive textual description refers to a predefined scenario in the field of road safety. In other word, the predefined scenario may include a scenario in which a threat to road safety is present, i.e. detected by the environment detection system. Examples of threats to road safety may be related to a road hazard, a driving environment and/or a traffic condition. In particular, the threat to road safety may be related to abnormal traffic conditions. "Abnormal" may mean that the traffic conditions (significantly) deviate from average or expected traffic conditions. The average or expected traffic conditions may be calculated based on historical data of traffic conditions. Examples of road hazard are a slow vehicle, a wrong-way driver, people, animals and/or obstacles on the road or a stationary vehicle, e.g. due to a breakdown or (illegal) parking. Examples of driving environments are weather, such as snow, rain, sun glare, icy roads and so on. Examples of traffic conditions are traffic jam, roadworks, accident or a passing by special emergency vehicle. Advantageously, data relevant with respect to road safety may be acquired such that the behavior of the driver and/or an autonomous driving function of the vehicle in a dangerous situation may be evaluated. Through the evaluation, hardware and/or software components of the vehicle may be improved to increase the road safety in future situations. In other words, at least one product of the vehicle may be improved based on the analysis and evaluation of the generated detected vehicle environment data in situations which are/were relevant to road safety.

According to another embodiment, the vehicle may further comprise a communication system connected to the interface and configured to receive a first communication signal including the image and/or the intuitive textual description of the predefined scenario from an external electronic device and/or backend server. For example, the communication system may include the interface, i.e. represent the interface. The first communication signal may be a wireless radio signal and/or a wired communication signal. The electronic device may be a handheld device or mobile device from a user of the vehicle. Accordingly, the user may predetermine when to trigger the data collection system by providing an image and/or intuitive textual description indicative of a predefined scenario of interest by the user. The backend server may be an external device allowing a (fleet) operator to predetermine scenarios, e.g. according to a data collection campaign, when to trigger the data collection system by providing an image and/or intuitive textual description indicative of a predefined of interest by the operator. This allows making data logging campaign setup more accessible and efficient.

According to another embodiment, the processor may be further configured to transmit a second communication signal to the external electronic device and/or backend server. The second communication signal may include the stored detected vehicle environment data and the obtained scenario identifier. In other words, the second communication signal may include the detected vehicle environment data and the obtained scenario identifier stored based on the controlled data collection system in response to the output of the trained model. Advantageously, the relevant data with respect to the predefined scenario are transmitted to the electronic device and/or the backend server to be available for analysis, validation and/or training data purposes. The second communication signal may further include vehicle related data.

According to another embodiment, the communication system may be further configured to receive a third communication signal from the external electronic device and/or backend server. The third communication signal may include an updated trained model for triggering the data collection system. Additionally or alternatively, the vehicle may further comprise a driver assistance system with a trained model for at least partially autonomously controlling a driving function of the vehicle through the driver assistance system and the third communication signal may include an updated trained model for at least partially autonomously controlling a driving function of the vehicle through the driver assistance system. The processor may be configured to update the trained model for triggering the data collection system and/or the trained model for at least partially autonomously controlling a driving function of the vehicle through the driver assistance system based on the received third communication signal. In other words, the updated model for triggering the data collection system and/or the updated trained model for at least partially autonomously controlling a driving function of the vehicle through the driver assistance system is/are trained based on the transmitted second communication signal, i.e. the stored detected vehicle environment data and the obtained scenario identifier. Accordingly, the respective model(s) may be (continuously) improved through further machine learning. In particular, the processor may be configured to use the respective updated model(s). Advantageously, an even more precise and meaningful data acquisition with significantly reduced setup effort is achieved.

According to another embodiment, the communication system may be further configured to receive a fourth communication signal including the trained model for triggering the data collection system from the external electronic device and/or the backend server. The processor may be configured to store the received trained model for triggering the data collection system in the memory. In other words, the vehicle is not required to be equipped with the trained model for triggering the data collection system but can receive the trained model for triggering the data collection system via communication with the electronic device and/or the backend server. Advantageously, existing vehicles without the necessary software for triggering the data collection system may be retrofitted with the trained model for triggering the data collection system such that a high amount of existing vehicles may be part of a fleet of vehicles for data logging. Accordingly, even more precise and meaningful data relevant to predefined scenarios may be acquired.

According to another aspect of the invention, a system comprising at least one vehicle as defined herein and an external electronic device and/or a backend server is provided. The features and the advantages of the vehicle can be applied analogously to the system. The external electronic device and/or the backend server is/are configured to provide the image and/or intuitive textual description indicative of a predefined scenario to the at least one vehicle and obtain detected vehicle environment data together with the identified scenario identifier based on the provided image and/or intuitive textual description from the at least one vehicle. Advantageously, the relevant data with respect to the predefined scenario are transmitted to the electronic device and/or the backend server to be available for analysis, validation and/or training data purposes.

According to an embodiment, the external electronic device and/or the backend server may be configured to provide the image and/or an intuitive textual description to a plurality of vehicles, obtain detected vehicle environment data together with the identified scenario identifier based on the image and/or intuitive textual description from the plurality of vehicles, train and/or update a model for triggering a data collection system and/or a model for at least partially autonomously controlling a driving function of a vehicle through a driver assistance system based on the obtained detected vehicle environment data and identified scenario identifiers and provide the trained and/or updated model for triggering a data collection system and/or a model for at least partially autonomously controlling a driving function of a vehicle through a driver assistance system to at least one of the plurality of vehicles. Accordingly, the respective model(s) may be (continuously) improved based on the generated date of a plurality of vehicles and through further machine learning performed on the electronic device and/or the backend server. Advantageously, an even more precise and meaningful data acquisition with significantly reduced setup effort is achieved.

According to another aspect of the invention, a method for a vehicle is provided. The vehicle may be the above-mentioned vehicle. The features and the advantages of the vehicle can be applied analogously to the method for improving road safety.

According to a step of the method, vehicle environment data are detected (by the vehicle).

According to another step of the method, an image and/or an intuitive textual description indicative of a predefined scenario is received (by the vehicle).

According to another step of the method, the received image and/or intuitive textual description and detected vehicle environment data are input to a stored trained model for triggering a data collection system of the vehicle.

According to another step of the method, in response to the input to the stored trained model for triggering a data collection system of the vehicle, an output is obtained from the trained model for triggering the data collection system of the vehicle. The output includes a scenario identifier corresponding to an identified predefined scenario corresponding to the input image and/or input intuitive textual description and a matching index indicating whether or not the detected vehicle environment data matches the identified predefined scenario.

According to another step of the method, in response to the obtained output of the trained model, the detected vehicle environment data are stored together with the obtained scenario identifier by controlling the data collection system of the vehicle.

According to another aspect of the invention, a method for generating a trained model for triggering a data collection system of a vehicle is provided. The features and the advantages of the above-mentioned method for a vehicle can be applied analogously to the method for generating a trained model for triggering a data collection system of a vehicle.

According to a step of the method, training data are provided. The training data include a plurality of images and/or intuitive textual descriptions indicative of predefined scenarios and corresponding predefined scenarios associated with each of the plurality of images and/or intuitive textual descriptions. The training data further include a plurality of vehicle environment data and scenarios associated with each of the vehicle environment data.

According to another step of the method, a model for triggering data collection is generated and trained based on the provided training data by an artificial neural network such that the trained model for triggering a data collection system is configured to identify a predefined scenario corresponding to an input image and/or intuitive textual description, generate a scenario identifier corresponding to the identified predefined scenario, generate a matching index indicating whether or not an input vehicle environment data matches the identified predefined scenario and output the generated scenario identifier and matching index. The trained model for triggering a data collection system may be used for the above-mentioned vehicle, system and/or method for the vehicle.

According to another aspect of the invention, an electronic device and/or backend server configured to perform the method for generating a trained model for triggering a data collection system of a vehicle is provided. The features and the advantages of the above-mentioned method for generating a trained model for triggering a data collection system of a vehicle can be applied analogously to the electronic device and/or backend server.

Each of the above-mentioned electronic devices and/or control units may be implemented by electrical or electronic parts or components (hardware) or by firmware (ASIC). Additionally or alternatively, the functionality of the electronic devices and/or control units may be realized when executing a suitable program (software). Also, the electronic devices and/or control units may be realized by a combination of hardware, firmware and/or software. For example, individual components of the electronic devices and/or control units for providing individual functionalities may be designed as a separate integrated circuits or may be arranged on a common integrated circuits.

The individual components of the electronic devices and/or control units may be designed as one or more processes running on one or more processors in one or more electronic computing devices and generated during execution of one or more computer programs. The computing devices may be configured to cooperate with other components to implement the functionalities described herein. The instructions of the computer programs may be stored in a memory, such as a RAM element. However, the computer programs may also be stored in a non-volatile storage medium, such as a CD-ROM, flash memory or the like.

It is further apparent to the skilled person that the functionalities of a plurality of computing units (data processing devices) may be combined or combined in a single device, or that the functionality of a particular data processing device may be distributed among a plurality of devices to implement the functionality of the electronic devices and/or control unit.

A further aspect relates to a computer program comprising instructions which, when the program is executed by a computer, such as an electronic device, a backend server and/or a control unit for a vehicle, cause the computer to perform any of the methods according to the invention, in particular a method for a vehicle and/or a method for generating a trained model for triggering a data collection system of a vehicle.

Further preferred embodiments of the invention result from the additional features mentioned in the dependent claims.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings. It shows:
- Fig. 1: schematically shows a vehicle according to an embodiment; and
- Fig. 2: schematically shows a flow chart of a method for generating a trained model for triggering a data collection system of a vehicle and a method for a vehicle according an embodiment.

In the following, recurring and similar features in this and in the subsequent representations are provided with the same reference numerals and a repetitive description thereof is omitted.

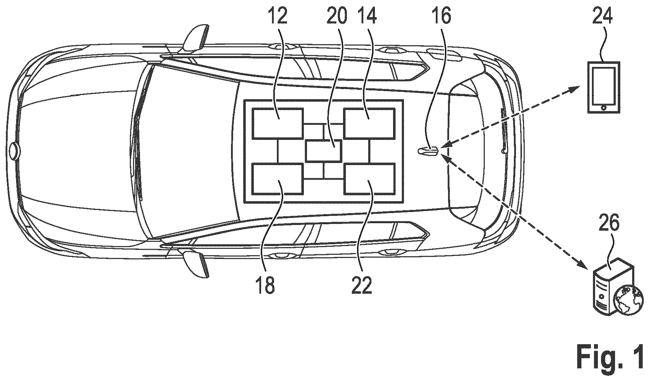

Figure 1 schematically shows a vehicle 10 according to an embodiment. The vehicle 10 may be an at least partially autonomously controlled vehicle or a fully autonomously controlled vehicle. For example the vehicle 10 is an AD vehicle including at least one (advanced) driver assistance system. The vehicle 10 may be one of a plurality of vehicles of a fleet of vehicles.

As shown in Figure 1, the vehicle 10 comprises an environment detection system 12, a data collection system 14, an interface 16, a memory 18 and a processor 20. The processor 20 is communicatively coupled to the environment detection system 12, the data collection system 14 and the memory 18.

The environment detection system 12 is configured to detect vehicle environment data. In other words, the environment detection system 12 is an ambient detection system configured to detect or monitor the vehicle's surroundings at least partially for terrain and/or objects and to provide sensor data related to the vehicle's surroundings. The environment detection system 12 may comprise at least one RADAR sensor, at least one LiDAR sensor and/or at least one camera sensor, e.g. a high definition (HD) camera sensor, each of which is configured to detect vehicle environment data. in particular, the environment detection system 12 may be configured to provide a 360° surround view.

The data collection system 14 is configured to receive and store the vehicle environment data detected by the environment detection system 12. The data collection system 14 may be further configured to store vehicle-related data, e.g. fixed information about the vehicle, such as model number, production series, hardware and/or software information, and/or dynamic information, such as location information, velocity and/or driving direction.

The interface 16 is configured to receive an image and/or an intuitive textual description indicative of a predefined scenario. The image and/or an intuitive textual description may be transmitted from an external electronic device 24 and/or a backend server 26 to the vehicle 10 via the interface 16. The interface 16 may be, for example, an antenna configured to exchange, i.e. transmit and/or receive, communication signals with the electronic device 24 and/or the backend server 26. The image may be a graphic representation of a situation corresponding to a predefined scenario, e.g. an obstacle in the environment, such as a cyclist crossing an intersection, a children playing with a ball, a deer passing the street, traffic jam, a train passing a crossing and so on, and/or an emergency situation, such as an traffic accident, an ambulance passing by, a component failure of a vehicle and so on. The intuitive textual description may be a textual representation of a situation corresponding to such a predefined scenario which may be provided by a non-expert user. The image may be accompanied by an intuitive textual description, e.g. an image representing a children playing with a ball and the text: "closer than 10 meter to the vehicle".

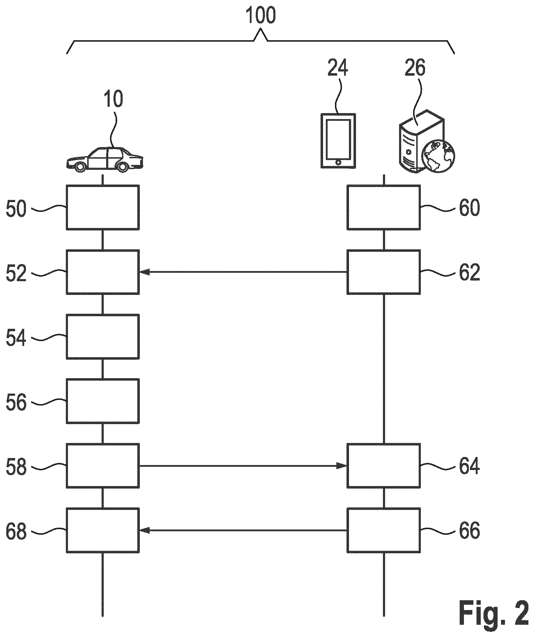

The memory 18, e.g. a non-volatile memory, stores a trained model for triggering the data collection system 14. The training of the trained model for triggering the data collection system 14 is described in view of Figure 2. The trained model for triggering the data collection system 14 is configured to identify a predefined scenario corresponding to an input image and/or intuitive textual description, generate a scenario identifier corresponding to the identified predefined scenario, generate a matching index indicating whether or not an input vehicle environment data matches the identified predefined scenario and output the generated scenario identifier and matching index. In other words, the trained model for triggering the data collection system 14 represents an artificial intelligence model which may be generated by machine learning. Such learning may be performed, e.g., by the vehicle 10 or via a separate device, such as the electronic device 24 and/or the backend server 26.

Figure 1 further shows that the vehicle 10 may include a communication system 22 connected to the interface 16 and configured to exchange communication signals, e.g. by using a direct communication technology such as Bluetooth, Ultra-Wide-Band (UWB) and so on, and/or by using an indirect communication technology via a terrestrial cellular network of base stations and/or wireless links to orbiting satellites, with the electronic device 24 and/or the backend server 26. For example, the communication system 22 may receive a communication signal including the image and/or the intuitive textual description of the predefined scenario from the electronic device 24 and/or the backend server 26. The electronic device 24 may be a handheld device or mobile device from a user of the vehicle 10. Accordingly, the user may predetermine when to trigger the data collection system 14 by providing an image and/or intuitive textual description indicative of a predefined scenario of interest by the user. The backend server 26 may be an external device allowing a (fleet) operator to predetermine scenarios, e.g. according to a data collection campaign, when to trigger the data collection system 14 by providing an image and/or intuitive textual description indicative of a predefined of interest by the operator. This allows making data logging campaign setup more accessible and efficient.

Figure 2 schematically shows a flow chart of a method for generating a trained model for triggering the data collection system 14 of the vehicle 10 of Figure 1 and a method for the vehicle 10 according an embodiment. Figure 2 further illustrates a system 100 including the vehicle 10, an electronic device 24 and/or a backend server as described in view of Figure 1.

According to a first step 60 of the method for generating the trained model for triggering the data collection system 14 of the vehicle 10, training data are provided by the electronic device 24 and/or the backend server 26. The training data include a plurality of images and/or intuitive textual descriptions indicative of predefined scenarios and corresponding predefined scenarios associated with each of the plurality of images and/or intuitive textual descriptions. The training data further include a plurality of vehicle environment data and scenarios associated with each of the vehicle environment data.

According to a second step 62, a model for triggering data collection is generated and trained based on the provided training data by an artificial neural network such that the trained model for triggering the data collection system 14 is configured to identify a predefined scenario corresponding to an input image and/or intuitive textual description, generate a scenario identifier corresponding to the identified predefined scenario, generate a matching index indicating whether or not an input vehicle environment data matches the identified predefined scenario and output the generated scenario identifier and matching index. Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto.

The trained model for triggering the data collection system 14 is transmitted to the vehicle 10 by the electronic device 24 and/or the backend server 26 and received by the communication system 22 of the vehicle 10. The processor 20 of the vehicle 10 stores the received trained model for triggering the data collection system 14 in the memory 18. Furthermore, the electronic device 24 and/or the backend server 26 transmits image and/or an intuitive textual description indicative of a predefined scenario. The image and/or an intuitive textual description may be provided by an user of the electronic device 24 and/or by an operator of the backend server 26.

According to a first step 50 of the method for the vehicle 10, vehicle environment data are continuously detected by the environment detection system 12 of the vehicle 10. Alternatively, the environment detection system 12 may only be temporally actuated to detect vehicle environment data.

According to a second step 52 of the method for the vehicle 10, the image and/or an intuitive textual description indicative of a predefined scenario transmitted by the electronic device 24 and/or the backend server 26 is received by the communication system 22 of the vehicle 10.

According to third step 54 of the method for the vehicle 10, the received image and/or intuitive textual description and the detected vehicle environment data are input to the (received and) stored trained model for triggering the data collection system 14 of the vehicle 10.

According to fourth step 56 of the method for the vehicle 10, in response to the input to the stored trained model for triggering the data collection system 14 of the vehicle 10, an output is obtained from the trained model for triggering the data collection system 14 of the vehicle 10. The output includes a scenario identifier corresponding to an identified predefined scenario corresponding to the input image and/or input intuitive textual description and a matching index indicating whether or not the detected vehicle environment data matches the identified predefined scenario.

According to fifth step 58 of the method for the vehicle 10, in response to the obtained output of the trained model, the detected vehicle environment data are stored together with the obtained scenario identifier in the memory 18 and another non-volatile memory of the vehicle by controlling the data collection system 14 of the vehicle 10.

Furthermore, the stored detected vehicle environment data and scenario identifier is transmitted by the communication system 22 of the vehicle 10 to the electronic device 24 and/or the backend server 26 to be available for analysis, validation and/or training data purposes.

According to a third step 64 of the method for generating the trained model for triggering the data collection system 14 of the vehicle 10, the trained model for triggering the data collection system 14 of the vehicle 10 is updated (or further trained) based on the detected vehicle environment data and scenario identifier received from the vehicle 10. Additionally or alternatively, a trained model for at least partially autonomously controlling a driving function of the vehicle 10 through an driver assistance system is evaluated and updated based on the detected vehicle environment data and scenario identifier received from the vehicle 10. In other words, at least one of the mentioned trained models are updated based on the detected vehicle environment data and scenario identifier received from the vehicle 10.

According to a fourth step 66 of the method for generating the trained model for triggering the data collection system 14 of the vehicle 10, the updated model for triggering the data collection system 14 of the vehicle 10 and/or the updated model for at least partially autonomously controlling a driving function of the vehicle 10 through an driver assistance system is transmitted from the electronic device 24 and/or the backend server 26 to the vehicle 10.

According to sixth step 68 of the method for the vehicle 10, the processor 20 updates the trained model for triggering the data collection system 14 of the vehicle 10 and/or the model for at least partially autonomously controlling a driving function of the vehicle 10 through an driver assistance system based on the received updated model for triggering the data collection system 14 of the vehicle 10 and/or the updated model for at least partially autonomously controlling a driving function of the vehicle 10 through an driver assistance system is transmitted from the electronic device 24 and/or the backend server 26.

By integrating artificial-intelligence-driven scenario recognition into data logging campaign setups, the process is streamlined, made more user-friendly, efficient, and effective in capturing relevant real-world driving scenarios.

### Reference signs

- 10: vehicle
- 12: environment detection system
- 14: data collection system
- 16: interface
- 18: memory
- 20: processor
- 22: communication system
- 24: electronic device
- 26: backend server

- 50: first method step - detecting vehicle environment data
- 52: second method step - receive image and/or intuitive textual description
- 54: third method step - input image and/or intuitive textual description
- 56: fourth method step - obtain output from the trained model
- 58: fifth method step - storing data
- 68: sixth method step - update trained model

- 60: first method step - provide training data
- 62: second method step - generate and train model
- 64: third method step - update model
- 66: fourth method step - transmit updated model

- 100: system

## Claims

1. A vehicle (10), comprising:
- an environment detection system (12) configured to detect vehicle environment data,
- a data collection system (14) configured to store the detected vehicle environment data,
- an interface (16) configured to receive an image and/or an intuitive textual description indicative of a predefined scenario,
- a memory (18) storing a trained model for triggering the data collection system (14) and
- a processor (20) configured to:
input an image and/or intuitive textual description received by the interface (16) and vehicle environment data detected by the environment detection system (12) to the trained model for triggering the data collection system (14),
in response to the input to the trained model for triggering the data collection system (14), obtain an output from the trained model for triggering the data collection system (14) including a scenario identifier corresponding to an identified predefined scenario corresponding to the input image and/or intuitive textual description and a matching index indicating whether or not the input detected vehicle environment data matches the identified predefined scenario and
in response to the obtained output of the trained model, control the data collection system (14) to store the detected vehicle environment data together with the obtained scenario identifier.

2. The vehicle (10) according to claim 1, wherein the data collection system (14) is configured to temporally store the detected vehicle environment data as a default and the processor (20) is configured to, in response to the obtained output of the trained model, control the data collection system (14) to store the detected vehicle environment data together with the obtained scenario identifier in a long-term storage manner.

3. The vehicle (10) according to any one of the preceding claims, wherein the processor (20) is configured to, in response to the obtained output of the trained model, control the environment detection system (12) to temporally increase the amount of detected vehicle environment data per time.

4. The vehicle (10) according to any one of the preceding claims, wherein the environment detection system (12) comprises a radar sensor, a lidar sensor and/or a camera sensor configured to detect vehicle environment data.

5. The vehicle (10) according to any one of the preceding claims, wherein the received image and/or the intuitive textual description refers to a predefined scenario in the field of road safety.

6. The vehicle (10) according to any one of the preceding claims, further comprising a communication system (22) connected to the interface (16) and configured to receive a first communication signal including the image and/or the intuitive textual description of the predefined scenario from an external electronic device (24) and/or backend server (26).

7. The vehicle (10) according the preceding claim, wherein the processor (20) is further configured to transmit a second communication signal to the external electronic device (24) and/or backend server (26), wherein the second communication signal includes the stored detected vehicle environment data and the obtained scenario identifier.

8. The vehicle (10) according to the preceding claim, wherein the communication system (22) is further configured to receive a third communication signal from the external electronic device (24) and/or backend server (26), wherein the third communication signal includes an updated trained model for triggering the data collection system (14) and/or
wherein the vehicle (10) further comprises a driver assistance system with a trained model for at least partially autonomously controlling a driving function of the vehicle (10) through the driver assistance system, wherein the third communication signal includes an updated trained model for at least partially autonomously controlling a driving function of the vehicle (10) through the driver assistance system, and
wherein the processor (20) is configured to update the trained model for triggering the data collection system (14) and/or the trained model for at least partially autonomously controlling a driving function of the vehicle (10) through the driver assistance system based on the received third communication signal.

9. The vehicle (10) according to any one of claims 6 to 8, wherein the communication system (22) is further configured to receive a fourth communication signal including the trained model for triggering the data collection system (14) from the external electronic device (24) and/or the backend server (26), wherein the processor (20) is configured to store the received trained model for triggering the data collection system (14) in the memory (18).

10. A system (100) comprising at least one vehicle (10) according to any one of the preceding claims and an external electronic device (24) and/or a backend server (26), wherein the external electronic device (24) and/or the backend server (26) is configured to:
provide the image and/or intuitive textual description indicative of a predefined scenario to the at least one vehicle (10) and
obtain detected vehicle environment data together with the identified scenario identifier based on the provided image and/or intuitive textual description from the at least one vehicle (10).

11. The system (100) according to the preceding claim, wherein the external electronic device (24) and/or the backend server (26) is configured to:
provide the image and/or an intuitive textual description to a plurality of vehicles (10),
obtain detected vehicle environment data together with the identified scenario identifier based on the image and/or intuitive textual description from the plurality of vehicles (10),
train and/or update a model for triggering a data collection system (14) and/or a model for at least partially autonomously controlling a driving function of a vehicle (10) through a driver assistance system based on the obtained detected vehicle environment data and identified scenario identifiers and
provide the trained and/or updated model for triggering a data collection system (14) and/or a model for at least partially autonomously controlling a driving function of a vehicle (10) through a driver assistance system to at least one of the plurality of vehicles (10).

12. A method for a vehicle (10), comprising the steps of:
- detect (50) vehicle environment data,
- receive (52) an image and/or an intuitive textual description indicative of a predefined scenario,
- inputting (54) the received image and/or intuitive textual description and detected vehicle environment data to a stored trained model for triggering a data collection system (14) of the vehicle (10),
- in response to the input to the stored trained model for triggering a data collection system (14) of the vehicle (10), obtaining (56) an output from the trained model for triggering the data collection system (14) of the vehicle (10) including a scenario identifier corresponding to an identified predefined scenario corresponding to the input image and/or input intuitive textual description and a matching index indicating whether or not the detected vehicle environment data matches the identified predefined scenario and
in response to the obtained output of the trained model, storing (58) the detected vehicle environment data together with the obtained scenario identifier by controlling the data collection system (14) of the vehicle (10).

13. A method for generating a trained model for triggering a data collection system (14) of a vehicle (10), comprising:
- providing (60) training data including a plurality of images and/or intuitive textual descriptions indicative of predefined scenarios, corresponding predefined scenarios associated with each of the plurality of images and/or intuitive textual descriptions, a plurality of vehicle environment data and scenarios associated with each of the vehicle environment data,
- generating and training (62) a model for triggering data collection based on the provided training data by an artificial neural network such that the trained model for triggering a data collection system (14) is configured to identify a predefined scenario corresponding to an input image and/or intuitive textual description, generate a scenario identifier corresponding to the identified predefined scenario, generate a matching index indicating whether or not an input vehicle environment data matches the identified predefined scenario and output the generated scenario identifier and matching index.

14. An electronic device (24) and/or backend server (26) configured to perform the method according to claim 13.

15. A computer program comprising instructions which, when the program is executed by a computer, cause the computer to perform at least one of the methods according to claims 12 and 13.

## Amended claims

### Amended claims in accordance with Rule 137(2) EPC.

1. A vehicle (10), comprising:
- an environment detection system (12) configured to detect vehicle environment data,
- a data collection system (14) configured to store the detected vehicle environment data,
- an interface (16) configured to receive an image and/or an intuitive textual description indicative of a predefined scenario,
- a memory (18) storing a trained model for triggering the data collection system (14) trained with the method according to claim 13 and
- a processor (20) configured to:
input an image and/or intuitive textual description received by the interface (16) and vehicle environment data detected by the environment detection system (12) to the trained model for triggering the data collection system (14),
in response to the input to the trained model for triggering the data collection system (14), obtain an output from the trained model for triggering the data collection system (14) including a scenario identifier corresponding to an identified predefined scenario corresponding to the input image and/or intuitive textual description and a matching index indicating whether or not the input detected vehicle environment data matches the identified predefined scenario and
in response to the obtained output of the trained model, control the data collection system (14) to store the detected vehicle environment data together with the obtained scenario identifier.

2. The vehicle (10) according to claim 1, wherein the data collection system (14) is configured to temporally store the detected vehicle environment data as a default and the processor (20) is configured to, in response to the obtained output of the trained model, control the data collection system (14) to store the detected vehicle environment data together with the obtained scenario identifier in a long-term storage manner.

3. The vehicle (10) according to any one of the preceding claims, wherein the processor (20) is configured to, in response to the obtained output of the trained model, control the environment detection system (12) to temporally increase the amount of detected vehicle environment data per time.

4. The vehicle (10) according to any one of the preceding claims, wherein the environment detection system (12) comprises a radar sensor, a lidar sensor and/or a camera sensor configured to detect vehicle environment data.

5. The vehicle (10) according to any one of the preceding claims, wherein the received image and/or the intuitive textual description refers to a predefined scenario in the field of road safety.

6. The vehicle (10) according to any one of the preceding claims, further comprising a communication system (22) connected to the interface (16) and configured to receive a first communication signal including the image and/or the intuitive textual description of the predefined scenario from an external electronic device (24) and/or backend server (26).

7. The vehicle (10) according the preceding claim, wherein the processor (20) is further configured to transmit a second communication signal to the external electronic device (24) and/or backend server (26), wherein the second communication signal includes the stored detected vehicle environment data and the obtained scenario identifier.

8. The vehicle (10) according to the preceding claim, wherein the communication system (22) is further configured to receive a third communication signal from the external electronic device (24) and/or backend server (26), wherein the third communication signal includes an updated trained model for triggering the data collection system (14) and/or
wherein the vehicle (10) further comprises a driver assistance system with a trained model for at least partially autonomously controlling a driving function of the vehicle (10) through the driver assistance system, wherein the third communication signal includes an updated trained model for at least partially autonomously controlling a driving function of the vehicle (10) through the driver assistance system, and
wherein the processor (20) is configured to update the trained model for triggering the data collection system (14) and/or the trained model for at least partially autonomously controlling a driving function of the vehicle (10) through the driver assistance system based on the received third communication signal.

9. The vehicle (10) according to any one of claims 6 to 8, wherein the communication system (22) is further configured to receive a fourth communication signal including the trained model for triggering the data collection system (14) from the external electronic device (24) and/or the backend server (26), wherein the processor (20) is configured to store the received trained model for triggering the data collection system (14) in the memory (18).

10. A system (100) comprising at least one vehicle (10) according to any one of the preceding claims and an external electronic device (24) and/or a backend server (26), wherein the external electronic device (24) and/or the backend server (26) is configured to:
provide the image and/or intuitive textual description indicative of a predefined scenario to the at least one vehicle (10) and
obtain detected vehicle environment data together with the identified scenario identifier based on the provided image and/or intuitive textual description from the at least one vehicle (10).

11. The system (100) according to the preceding claim, wherein the external electronic device (24) and/or the backend server (26) is configured to:
provide the image and/or an intuitive textual description to a plurality of vehicles (10), obtain detected vehicle environment data together with the identified scenario identifier based on the image and/or intuitive textual description from the plurality of vehicles (10), train and/or update a model for triggering a data collection system (14) and/or a model for at least partially autonomously controlling a driving function of a vehicle (10) through a driver assistance system based on the obtained detected vehicle environment data and identified scenario identifiers and
provide the trained and/or updated model for triggering a data collection system (14) and/or a model for at least partially autonomously controlling a driving function of a vehicle (10) through a driver assistance system to at least one of the plurality of vehicles (10).

12. A method for a vehicle (10), comprising the steps of:
- detect (50) vehicle environment data,
- receive (52) an image and/or an intuitive textual description indicative of a predefined scenario,
- inputting (54) the received image and/or intuitive textual description and detected vehicle environment data to a stored trained model for triggering a data collection system (14) of the vehicle (10) trained with the method according to claim 13,
- in response to the input to the stored trained model for triggering a data collection system (14) of the vehicle (10), obtaining (56) an output from the trained model for triggering the data collection system (14) of the vehicle (10) including a scenario identifier corresponding to an identified predefined scenario corresponding to the input image and/or input intuitive textual description and a matching index indicating whether or not the detected vehicle environment data matches the identified predefined scenario and
in response to the obtained output of the trained model, storing (58) the detected vehicle environment data together with the obtained scenario identifier by controlling the data collection system (14) of the vehicle (10).

13. A method for generating a trained model for triggering a data collection system (14) of a vehicle (10), comprising:
- providing (60) training data including a plurality of images and/or intuitive textual descriptions indicative of predefined scenarios, corresponding predefined scenarios associated with each of the plurality of images and/or intuitive textual descriptions, a plurality of vehicle environment data and scenarios associated with each of the vehicle environment data,
- generating and training (62) a model for triggering data collection based on the provided training data by an artificial neural network such that the trained model for triggering a data collection system (14) is configured to identify a predefined scenario corresponding to an input image and/or intuitive textual description, generate a scenario identifier corresponding to the identified predefined scenario, generate a matching index indicating whether or not an input vehicle environment data matches the identified predefined scenario and output the generated scenario identifier and matching index.

14. An electronic device (24) and/or backend server (26) configured to perform the method according to claim 13.

15. A computer program comprising instructions which, when the program is executed by a computer, cause the computer to perform at least one of the methods according to claims 12 and 13.
